# FASCICULE DE BREVET EUROPEEN

(11) **EP 0 438 339 B1**
(45) Date de publication et mention de la délivrance du brevet: **15.06.1994**
(21) Numéro de dépôt: 91400066.6
(22) Date de dépôt: 14.01.1991
(51) Int. Cl.: B44F 9/04, C04B 26/04, B29C 45/00

(54) **Procédé d'obtention de pièces ayant l'aspect de pierres naturelles et pièces ainsi obtenues**
Verfahren zur Herstellung von Formkörpern, die Natursteinen ähnlich sind und damit hergestellte Formkörper
Process for obtaining articles having the aspect of natural stones and articles obtained

(30) Priorité: 17.01.1990 FR 9000476
(43) Date de publication de la demande: 24.07.1991
(73) Titulaire: L'OREAL, 75008 Paris (FR)
(72) Inventeur: Gueret, Jean-Louis, F-75018 Paris (FR)
(74) Mandataire: Peuscet, Jacques

(56) Documents cités:
- BE-A- 385 202
- BE-A- 898 289
- DE-A- 3 445 189
- FR-A- 2 413 205
- US-A- 4 137 215
- US-A- 4 306 848
- CHEMICAL ABSTRACTS, vol. 110, no. 8, Columbus, Ohio, USA ref. no. 62710E; JP-A-63 207610

## Description

La présente invention porte sur un procédé d'obtention de pièces ayant l'aspect de pierres naturelles et destinées, notamment, à des conditionnements de produits cosmétiques, ainsi que sur les pièces ainsi obtenues ayant l'aspect de pierres naturelles.

On sait utiliser, pour effectuer le moulage par injection de pièces de différentes formes et dimensions, un mélange préparé avant injection de polypropylène et de sciure de bois, la proportion de sciure étant généralement comprise entre 10 et 50 % en poids.

Le thermoformage d'un matériau de ce genre peut se faire dans tous dispositifs d'injection de type classique prévus pour le moulage de matières thermoplastiques. Le mélange de sciure de bois et de polypropylène peut être introduit dans le (ou les) cylindre(s) ou pot(s) chauffé(s) d'une machine à injection habituelle où la résine thermoplastique se ramollit et fond; un organe de mise en compression, tel qu'un piston ou une vis sans fin, injecte alors le mélange de résine thermoplastique fondue et de sciure par une tête d'injection placée en bout de cylindre, dans un moule.

On règle habituellement la température de la partie avant du cylindre à 160°C environ et celle de la partie arrière à 180°C environ, les valeurs ci-dessus indiquées pouvant varier dans un intervalle de ± 15°C suivant la forme et la taille de la pièce à mouler, la quantité de matière nécessaire et d'autres paramètres de moulage tels que la pression d'injection, la proportion de sciure de bois dans le mélange, etc. Ainsi, pour une pièce déterminée que l'on désire mouler, il existe une température t₁ pour la partie arrière du cylindre équipant la machine d'injection et une température t₂ pour la partie avant dudit cylindre - t₁ étant inférieure à t₂ - qui correspondent à une opération optimale de moulage par injection, la pièce moulée ayant alors un aspect uniforme et possédant les caractéristiques physiques, qui sont habituellement obtenues avec ce genre de matériau. Par ailleurs, on sait également que la matière injectée dans le moule ne doit en aucune façon excéder la température de 210°C qui correspond à un seuil de décomposition du bois. Si une telle température est atteinte ou dépassée, il se produit un dégazage et une expansion de la matière ainsi chauffée, de sorte que la pièce moulée, qui est obtenue, est totalement inutilisable.

Dans le brevet français 2 413 205, on a déjà indiqué qu'en augmentant les températures optimales des parties avant et arrière du pot de la machine d'injection d'une valeur Δ t comprise entre 5 et 15°C sans dépasser le seuil de 210°C de décomposition du bois, on obtient une pièce moulée de coloration plus foncée, dont la paroi présente des marbrures lui donnant l'apparence du bois. Cet aspect décoratif est obtenu sans aucune déformation de la pièce moulée et est parfaitement reproductible. On suppose que l'accroissement des températures optimales des parties avant et arrière du pot fait que la sciure de bois contenue dans le mélange est soumise à une transformation mais que les températures de chauffage demeurent insuffisantes pour qu'il y ait décomposition, dégazage et expansion de la matière injectée. On obtient ainsi des pièces ayant l'aspect du bois.

Il est, par ailleurs, connu par JP-A 63207610 de fabriquer un produit ayant l'aspect du marbre en préparant une feuille préimprégnée contenant des fibres et une charge minérale et une résine thermodurcissable en laminant la feuille imprégnée et en la durcissant à chaud. BE-A 385 202 concerne un procédé de fabrication de grès artificiel dans lequel on mélange une résine thermodurcissable à l'état sec ou en solution avec des matières fibreuses et on comprime le mélange dans des moules chauffés sous une forte pression. BE-A 898 289 concerne un procédé de fabrication d'un matériau composite de type béton de résine contenant des microbilles de verre et, éventuellement, une autre charge. Ce matériau contient de 88 à 95 % de charge et de 5 à 12 % de résine thermodurcissable et il est préparé sans qu'il y ait fusion du mélange.

En recherchant maintenant de nouveaux effets esthétiques pour des pièces obtenues par mise en forme d'une matière thermoplastique par injection, moulage, rotomoulage ou extrusion, la demanderesse a trouvé qu'en utilisant un mélange de matière thermoplastique fondue contenant au moins deux charges de granulométrie et dimension différentes et par un choix approprié de la nature de ces charges et de la nature de la matrice thermoplastique du mélange à mettre en forme, de leurs proportions et de leurs couleurs, de la granulométrie ou dimension des charges, on peut obtenir avec une bonne reproductibilité des pièces, qui imitent une pierre naturelle déterminée, dont la surface, de façon surprenante, ne donne pas l'impression d'une pièce en matière plastique et où la teinte et l'aspect de marbrures, mouchetés ou analogues, sont dans la masse et non en surface. Les pièces sont utilisées pour leur aspect esthétique ; elles sont, notamment, destinées à la fabrication de conditionnement ou accessoires de conditionnement, pour produits cosmétiques tels que capuchons, bouchons, bottiers et analogues.

La présente invention a donc pour objet un procédé de fabrication de pièces ayant l'aspect de pierres naturelles, par mise en forme d'une composition comportant une matrice en résine thermoplastique et une charge, ladite mise en forme étant précédée par au moins une étape au cours de laquelle ladite composition à l'état fondu est soumise, en totalité et/ou pour au moins une de ses parties contenant au moins une fraction de la résine thermoplastique, à au moins une opération de mélangeage, caractérisé par le fait que l'on utilise la composition comprenant pour 100 parties en volume de résine thermoplastique colorée ou non, 0,2 à 80 parties en volume d'au moins deux charges colorées ou non, choisies parmi les fibres naturelles, les fibres de carbone et les charges minérales ou végétales et ayant une granulométrie ou des dimensions différentes.

On utilise, de préférence, trois charges de granulométries différentes; la charge de granulométrie la plus fine est, de préférence, une charge minérale et les deux autres charges sont des fibres naturelles. Dans ce dernier cas, par exemple lorsqu'on utilise du talc comme charge minérale, des fibres naturelles teintées ou non, constituées par de la poussière de bois ayant des dimensions comprises entre 200 et 300 microns et des fibres de bois de dimension plus grande, on obtient une pièce moulée dans laquelle la charge minérale forme un fond moucheté par la poussière de bois, la surface de la pièce étant animée par les fibres de bois de plus grande dimension.

La matrice peut être constituée par toute résine, c'est-à-dire tout polymère, copolymère ou mélange de polymères et/ou copolymères, thermoplastique. On peut, par exemple, utiliser une résine acrylique, un chlorure de polyvinyle, un nylon, du polyéthylène linéaire, du polystyrène et du polypropylène ou un copolymère acrylonitrile-butadiène-styrène. Ces résines thermoplastiques peuvent de façon connue être modifiées en introduisant de 0,1 à 30 % en poids d'un élastomère tel que le copolymère d'éthylène et d'acétate de vinyle (EVA) ou un tripolymère d'éthylène, propylène et diène monomère (EPDM). Les polymères ou copolymères thermoplastiques et, éventuellement, l'élastomère peuvent être introduits sous forme de granulés blancs, incolores ou teintés (ocre, bleu, gris, marron, vert, etc...). On utilise, par exemple, les granulés de polypropylène teintés que l'on trouve dans le commerce.

Comme fibres, on utilise de préférence des fibres naturelles résistant à la température de fusion de la matrice thermoplastique, en particulier, à une température de l'ordre de 200°C. Les fibres naturelles sont avantageusement choisies parmi les fibres de bois (poussière de bois, sciure), les fibres de liane, et les fibres de coton. Les fibres naturelles mises en oeuvre, selon l'invention, présentent avantageusement un diamètre compris entre 0,7 et 300 microns et une longueur comprise entre 1 micron et 5 mm. On peut, éventuellement, lorsqu'on désire des fibres noires, utiliser des fibres de carbone. Ces fibres ont, de préférence, une longueur comprise entre 100 microns et 3 mm. Lorsqu'on utilise une charge comprenant des fibres de dimensions différentes, les fibres de plus faible dimension ont avantageusement une longueur comprise entre 1 micron et 1,9 mm et les fibres de plus grande dimension une longueur comprise entre 2 mm et 5 mm.

Comme charges, on peut utiliser des charges minérales telles que le carbonate de calcium, le sulfate de calcium, l'oxyde de zinc, le carbonate de zinc, l'oxyde, l'hydroxyde ou le silicate de magnésium, par exemple le talc, des silicoaluminates, comme le mica, la terre de sienne, les argiles ou des microbilles de verre. On peut également éventuellement utiliser des charges végétales, en particulier des amidons tels que l'amidon de maïs ou la farine de riz. La (les) charge(s) utilisée(s) a (ont) une granulométrie qui va, par exemple, d'environ 0,5 micron à environ 0,2 mm. Les charges minérales et, plus particulièrement les microbilles, ont pour avantage de rigidifier la matière plastique.

On peut introduire avantageusement dans la matrice les charges sous forme de prémélange avec un polymère thermoplastique compatible avec la résine thermoplastique de la matrice, de préférence identique à celle-ci. Dans ce cas le prémélange peut également contenir de 0,5 à 80 parties en volume de charge(s) pour 100 parties en volume de polymère thermoplastique.

Les fibres ou les charges introduites peuvent être colorées ou non. La coloration des charges peut être obtenue par imprégnation à l'aide d'un colorant liquide, en particulier hydrosoluble, ou par mélange avec un colorant pulvérulent ou pigment. Le colorant est, bien entendu, choisi parmi ceux résistant à la température de fusion de la matrice. On peut effectuer la coloration, en même temps que l'on effectue le prémélange. Dans ce cas, le polymère thermoplastique du prémélange a, de préférence, la même couleur, mais pas forcément la même nuance que la charge.

La demanderesse a observé que, lorsqu'on introduit une charge colorée dans une matrice thermoplastique colorée ou non, la couleur de la charge ne varie pas et ne modifie pas la couleur de la matrice; en d'autres termes, il n'y a pas de reprise de couleur par la matrice lors de la mise en forme, par exemple lors du moulage. Ceci est vrai que la matrice soit transparente, blanche ou colorée. De même lorsqu'on incorpore une charge non colorée dans une matrice colorée, la charge ne prend pas la couleur de la matrice. Par contre, si on introduit dans la matrice thermoplastique un prémélange, dont le polymère thermoplastique est coloré ou blanc, ce dernier modifie la couleur ou la nuance de la matrice thermoplastique. Ces observations permettent de prévoir l'aspect de la pierre artificielle obtenue, selon la composition utilisée.

Par conséquent, selon la présente demande, en choisissant la couleur de la matrice, le nombre, la proportion, la granulométrie et la couleur des différentes charges, et en tenant compte des observations données ci-dessus, on peut imiter l'aspect général et les teintes de diverses pierres naturelles. Il faut noter que, si on le désire, on peut obtenir, de façon reproductible, une répartition homogéne des différentes charges dans la matrice.

Pour la fabrication des pièces, on prépare un mélange des différentes charges telles quelles ou sous forme de prémélange(s), en particulier en granulés avec la (les) résine(s) thermoplastique(s), on fait fondre le mélange et on soumet le produit fondu à un mélange plus ou moins complet, selon l'aspect que l'on veut donner à la pièce (marbré ou homogène). La mise en forme du produit se fait alors par tout procédé connu de mise en forme des résines thermoplastiques: extrusion, moulage par injection, par soufflage, par compression ou rotomoulage. La forme de la pièce obtenue peut être modifiée ensuite mécaniquement. L'opération de moulage peut être effectuée avantageusement dans un dispositif de moulage par injection de type classique comportant au moins un pot chauffé dans lequel se déplace un organe de mise en compression, le pot chauffé débouchant par au moins une tête d'injection à l'intérieur d'un moule; on choisit l'organe de compression selon le degré de mélangeage qu'il peut donner à la composition de moulage à l'intérieur du pot, dans le but d'obtenir un effet allant du moucheté régulier par suite d'un mélangeage intime à celui de marbrures par suite d'une simple poussée de la matière dans le pot chauffé, sans aucun malaxage de ladite matière.

Conformément à ce procédé, on réalise avantageusement l'opération de moulage en portant, au moyen d'organes de chauffage appropriés, la partie arrière du pot par où s'effectue l'introduction du mélange, à une température t₁ , et la partie avant du pot, par où s'effectue l'injection dans le moule, a une température t₂ , les deux températures précitées correspondant à des températures optimum de moulage pour une pièce déterminée a réaliser et étant telles que t₁ < t₂ < 210°C. En particulier, t₁ peut varier de 170 à 200°C et t₂ de 180 à 210°C.

La présente invention a également pour objet les pièces moulées ayant l'aspect de pierres naturelles, destinées notamment à des conditionnements de produits cosmétiques et susceptibles d'être obtenues par la mise en oeuvre du procédé tel qu'il vient d'être défini.

Pour mieux faire comprendre l'objet de la présente invention, on va en décrire maintenant, à titre d'exemples purement illustratifs et non limitatifs, plusieurs modes de mise en oeuvre.

Dans ces exemples, les parties et les pourcentages sont donnés en volume. Les granulés de polypropylène utilisés, le cas échéant colorés et/ou chargés, ont une dimension de l'ordre de 0,5 à 7 mm ; ils sont commercialisés par la Société "HIMONT" sous la dénomination "MOPLEN"®. Les fibres de bois contenues dans les granulés, qui sont indiquées comme étant longues, ont une dimension de l'ordre de 2 à 5 mm, et celles indiquées comme étant courtes ont une dimension de l'ordre de 1 micron à 1,9 mm.

Lorsque les fibres ou les pigments incorporent un colorant hydrosoluble, ledit colorant est mis en place sur son support en trempant le support de façon continue pendant 1 à 15 min. dans une solution aqueuse de 5 à 30 % en poids dudit colorant.

### Exemple 1

On prépare la formulation suivante:
- Granulés de polypropylène blanc 10 parties
- Granulés de polypropylène bleu clair, contenant 40 % de fibres de bois courtes teintées en bleu plus foncé 1 partie
- Granulés de polypropylène vert clair contenant 40 % de fibres de bois longues teintées en vert plus foncé 1 partie
- Granulés de polypropyléne beige clair contenant 40 % de fibres de bois courtes teintées en beige plus foncé 3 parties

On introduit le mélange de granulés de polypropylène et de fibres de bois ayant la composition ci-dessus dans le pot d'une machine à vis sans fin. La température de la partie arrière du pot par où s'effectue l'introduction du mélange, est réglée à 190°C, et la température de la partie avant du pot, par où s'effectue l'injection dans le moule, à 200°C. Le mélange, qui est ramolli à l'intérieur du pot chauffé, est injecté sous forte pression à travers une tête d'injection dans un moule; la compression et l'injection du mélange s'effectuent grâce à une vis sans fin rotative.

On obtient une pièce moulée ayant l'apparence d'une pierre, dont la couleur présente un fond verdâtre moucheté de petites taches bleues, vertes et beiges.

### Exemple 2

On prépare la même formulation qu'à l'Exemple 1 et, pour le moulage, on procède comme à l'Exemple 1, à ceci près qu'on utilise une machine d'injection équipée d'un piston, lequel, contrairement à la vis sans fin, ne malaxe pas intimement la masse à mouler. Dans ces conditions, on obtient une pièce moulée ayant l'apparence d'un marbre présentant, sur un fond verdâtre, des traînées beiges et vertes, ainsi qu'un moucheté de petites taches également beiges et vertes.

### Exemple 3

On prépare la formulation suivante:
- Granulés de polypropylène blanc chargé à 50 % de carbonate de calcium 18 parties
- Granulés de polypropylène transparent contenant 40 % de fibres longues de bois naturel 5 parties
- Pigments rouges résultant du mélange de carbonate de calcium avec une solution aqueuse concentrée du colorant hydrosoluble "éosine" mélangés avec du polypropylène incolore 20 parties
- Pigments bleus résultant du mélange de carbonate de calcium avec une solution aqueuse concentrée du colorant hydrosoluble "bleu de méthylène" mélangés avec du polypropylène 20 parties
- Pigments verts résultant du mélange de carbonate de calcium avec une solution aqueuse concentrée du colorant hydrosoluble "vert de malachite" mélangés avec du polypropylène incolore 20 parties

Pour le moulage, on procède comme à l'Exemple 1, et on obtient une pièce moulée ayant l'apparence d'une pierre, dont la teinte présente un fond blanc comportant un semis de petites taches bleu, rouge et vert et bois naturel.

### Exemple 4

On prépare la formulation suivante:
- Granulés de polypropylène beige contenant 40 % de fibres de bois courtes teintées en beige plus foncé 4 parties
- Granulés de polypropylène transparent contenant 40 % de fibres longues de bois naturel 4 parties
- Granulés de polypropylène blanc chargé à 50 % de carbonate de calcium 2 parties

Pour le moulage, on procède comme à l'Exemple 1, et on obtient une pièce moulée ayant l'apparence d'une pierre, dont la teinte présente un fond beige clair, avec un "piqueté" de fond issu des fibres courtes et un "piqueté" de dessus provenant des fibres longues.

### Exemple 5

On prépare la formulation suivante:
- Granulés de polypropylène blanc chargé à 20 % de carbonate de calcium 18 parties
- Sciure de bois (dimension: 1,2 mm) 1 partie

Pour le moulage, on procède comme à l'Exemple 1, et l'on obtient une pièce moulée ayant l'apparence d'une pierre, dont la teinte présente un fond blanc moucheté de petites taches clairsemées de couleur brun clair provenant de la sciure de bois.

### Exemple 6

On prépare la même formulation qu'à l'Exemple 5, en remplaçant la sciure de bois par des granulés de polypropylène transparent contenant 40 % de sciure de bois.

On obtient à partir de ce mélange une pièce moulée d'aspect sensiblement identique à celle obtenue à l'Exemple 5.

### Exemple 7

On prépare la formulation suivante:
- Granulés de polypropylène blanc non chargé 10 parties
- Granulés de polypropylène beige clair, contenant 40 % de fibres de bois courtes teintées en beige plus foncé 1 partie
- Granulés de polypropylène ocre contenant 40 % de fibres de bois longues teintées en ocre plus foncé 1 partie

Pour le moulage, on procède comme à l'Exemple 1, et on obtient une pièce moulée ayant l'apparence d'une pierre, dont la teinte présente un fond beige très clair moucheté de taches de grandeur irrégulière de couleur marron, ocre et beige foncé.

### Exemple 8

On prépare la formulation suivante:
- Granulés de polypropylène blanc 10 parties
- Granulés de polypropylène bleu chargés de 60 % de fibres de bois longues teintées en bleu 1 partie
- Granulés de polypropylène beige clair contenant 40 % de fibres de bois courtes teintées en beige clair 2 parties
- Granulés de polypropylène ocre clair contenant 40 % de fibres de bois courtes teintées en ocre clair 2 parties
- Granulés de polypropylène vert à 45 % de fibres de bois courtes teintées en vert 0,5 partie
- Pigments bleus résultant du mélange de 20 % de talc avec une solution aqueuse concentrée du colorant hydrosoluble "bleu de méthylène" 0,05 partie

Pour le moulage, on procède comme à l'Exemple 1, et l'on obtient une pièce moulée ayant l'apparence d'une pierre, dont la teinte présente un fond gris bleu parsemé de points et taches beiges, bleus, ocres et verts.

### Exemple 9

On prépare la formulation suivante:
- ABS blanc en granulés contenant 50 % de carbonate de calcium 30 parties
- EVA en granulés contenant 40 % de fibres courtes de bois naturel 5 parties
- Polypropylène en granulés contenant 20 % de fibres de bois longues, teintées en rose 30 parties
- Polypropylène en granulés contenant 40 % de fibres de bois longues, teintées en marron 35 parties

On mélange dans un tonneau rotatif à froid l'ensemble des granulés ci-dessus. Puis on introduit le mélange à l'aide d'une trémie dans un pot à vis dans lequel la température de la partie arrière est de 170 °C et la température de la partie avant est de 200 °C. Le pot alimente par extrusion un moule; le produit moulé obtenu est une pièce présentant un fond blanc mat piqueté de beige parsemé de taches beiges et marron.

### Exemple 10

On prépare la formulation suivante:
- Granulés de polypropylène beige 55 parties
- Granulés de polypropylène beige contenant 40 % de carbonate de calcium 29 parties
- Fibres de bois naturel courtes 3 parties
- Fibres de bois naturel longues teintées en rose 6 parties
- Fibres de bois naturel longues teintées en marron 6 parties
- Huile de paraffine transparente 1 partie

Pour le moulage, on procède comme dans l'exemple 9. On obtient une pièce comportant un fond beige mat chiné avec en surface des particules marron et roses.

## Revendications

1. Procédé de fabrication de pièces ayant l'aspect de pierres naturelles par mise en forme d'une composition comportant une matrice en résine thermoplastique et une charge, ladite mise en forme étant précédée par au moins une étape au cours de laquelle ladite composition à l'état fondu est soumise, en totalité et/ou pour au moins une de ses parties contenant au moins une fraction de la résine thermoplastique, à au moins une opération de mélangeage, caractérisé par le fait que l'on utilise la composition comprenant pour 100 parties en volume de résine thermoplastique colorée ou non, 0,2 à 80 parties en volume d'au moins deux charges colorées ou non, choisies parmi les fibres naturelles, les fibres de carbone et les charges minérales ou végétales et ayant une granulométrie ou des dimensions différentes.

2. Procédé selon la revendication 1, caractérisé par le fait que l'on utilise trois charges différentes.

3. Procédé selon la revendication 2, caractérisé par le fait que l'on utilise une charge minérale comme charge la plus fine et des fibres naturelles de dimensions différentes pour les deux autres charges.

4. Procédé selon l'une des revendications 1 à 3, caractérisé par le fait que l'on utilise la matrice constituée par une résine acrylique, un chlorure de polyvinyle, un nylon, du polyéthylène linéaire, du polystyrène, du polypropylène ou un copolymère acrylonitrile-butadiène-styrène.

5. Procédé selon l'une des revendications 1 à 4, caractérisé par le fait que l'on utilise la matrice modifiée par 0,1 à 30 % d'un élastomère.

6. Procédé selon l'une des revendications 1 à 5, caractérisé par le fait que l'on utilise des fibres naturelles résistant à une température de l'ordre de 200°C.

7. Procédé selon l'une des revendications 1 à 6, caractérisé par le fait que l'on utilise les fibres choisies parmi les fibres cellulosiques.

8. Procédé selon l'une des revendications 1 à 7, caractérisé par le fait que l'on utilise les fibres naturelles mises en oeuvre avec un diamètre compris entre 0,7 et 300 microns et une longueur comprise entre 1 micron et 5 mm.

9. Procédé selon l'une des revendications 1 à 8, caractérisé par le fait que l'on utilise une charge comprenant des fibres de dimensions différentes, les fibres de faible dimension ayant une longueur comprise entre 1 micron et 1,9 mm et les fibres de plus grande dimension, une longueur comprise entre 2 mm et 5 mm.

10. Procédé selon l'une des revendications 1 à 5, caractérisé par le fait que l'on utilise les fibres sous forme de fibres de carbone ayant une longueur comprise entre 100 microns et 3 mm.

11. Procédé selon l'une des revendications 1 à 10, caractérisé par le fait que l'on choisit la (les) charge(s) minérale(s) dans le groupe formé par le carbonate de calcium, le sulfate de calcium, l'oxyde de zinc, le carbonate de zinc, l'oxyde, l'hydroxyde ou un silicate de magnésium, les silicoaluminates ou des microbilles de verre.

12. Procédé selon l'une des revendications 1 à 10, caractérisé par le fait que l'on choisit comme charge un amidon.

13. Procédé selon l'une des revendications 1 à 11, caractérisé par le fait que l'on utilise une (des) charge(s) minérale(s) ayant une granulométrie, qui va d'environ 0,5 micron à environ 0,2 mm.

14. Procédé selon l'une des revendications 1 à 13, caractérisé par le fait que l'on introduit la (les) charge(s) dans la matrice sous forme de prémélange avec un polymère thermoplastique compatible avec la résine thermoplastique de la matrice, de préférence identique à celle-ci.

15. Procédé selon la revendication 14, caractérisé par le fait que l'on utilise le prémélange contenant de 0,5 à 80 parties en volume de charge(s) minérale(s) pour 100 parties en volume de polymère thermoplastique.

16. Procédé selon l'une des revendications 1 à 15, caractérisé par le fait que l'on obtient la coloration des charges par imprégnation à l'aide d'un colorant liquide ou par mélange avec un colorant pulvérulent.

17. Procédé selon l'une des revendications 1 à 16, caractérisé par le fait que l'on effectue l'opération de moulage dans un dispositif de moulage par injection de type classique comportant un pot chauffé, dans lequel se déplace un organe de mise en compression, le pot chauffé débouchant, par au moins une tête d'injection, à l'intérieur d'un moule et que l'on choisit l'organe de compression selon le degré de mélangeage qu'il peut donner à la composition de moulage à l'intérieur du pot, dans le but d'obtenir un effet allant du moucheté régulier par suite d'un mélangeage intime à celui de marbrures par suite d'une simple poussée de la matière dans le pot chauffé sans aucun malaxage de celle-ci.

18. Procédé selon la revendication 17, caractérisé par le fait qu'on réalise l'opération de moulage en portant, au moyen d'organes de chauffage appropriés, la partie arrière du pot, par où s'effectue l'introduction du mélange, à une température t₁, et la partie avant du pot, par où s'effectue l'injection dans le moule, à une température t₂, les deux températures précitées correspondant à des températures optimales de moulage pour une pièce déterminée à réaliser et étant telle que t₁ < t₂ < 210°C.

19. Pièces moulées ayant l'aspect de pierres naturelles susceptibles d'être obtenues par la mise en oeuvre du procédé tel que défini à l'une des revendications 1 à 18.

## Patentansprüche

1. Verfahren zur Herstellung von Formkörpern, die Natursteinen ähnlich sind, wobei man eine eine Matrix aus thermoplastischem Harz und einen Füllstoff umfassende Zusammensetzung formt, wobei dem Formvorgang wenigstens eine Stufe vorgeschaltet ist, in deren Verlauf die Zusammensetzung im geschmolzenen Zustand als Ganzes und/oder einer ihrer Bestandteile, der wenigstens einen Teil des thermoplastischen Harzes enthält, einem Mischvorgang unterzogen wird,
**dadurch gekennzeichnet,** daß
man eine Zusammensetzung verwendet, die, bezogen auf 100 Vol.- Teile des gegebenenfalls gefärbten thermoplastischen Harzes, 0,2 bis 80 Vol.-Teile wenigstens zweier gegebenenfalls gefärbter Füllstoffe umfaßt, ausgewählt unter natürlichen Fasern, Kohlefasern und mineralischen oder pflanzlichen Füllstoffen, mit unterschiedlicher Körnung oder Abmessung.

2. Verfahren nach Anspruch 1, dadurch gekennzeichnet, daß man drei verschiedene Füllstoffe verwendet.

3. Verfahren nach Anspruch 2, dadurch gekennzeichnet, daß man einen mineralischen Füllstoff als feineren Füllstoff verwendet und man Naturfasern unterschiedlicher Abmessung als die beiden anderen Füllstoffe verwendet.

4. Verfahren nach einem der Ansprüche 1 bis 3, dadurch gekennzeichnet, daß man eine Matrix verwendet, welche von einem Acrylharz, einem Polyvinylchlorid, einer Nylonverbindung, von linearem Polyethylen, Polystyrol, Polypropylen oder einem Acrylnitril-butadien-styrol-copolymer gebildet wird.

5. Verfahren nach einem der Ansprüche 1 bis 4, dadurch gekennzeichnet, daß man eine Matrix verwendet, welche mit 0,1 bis 30 % eines Elastomers modifiziert ist.

6. Verfahren nach einem der Ansprüche 1 bis 5, dadurch gekennzeichnet, daß man Naturfasern verwendet, die bei einer Temperatur im Bereich von 200°C beständig sind.

7. Verfahren nach einem der Ansprüche 1 bis 6, dadurch gekennzeichnet, daß man Fasern verwendet, die ausgewählt sind unter Cellulosefasern.

8. Verfahren nach einem der Ansprüche 1 bis 7, dadurch gekennzeichnet, daß man natürliche Fasern mit einem Durchmesser im Bereich von 0,7 bis 300 »m und einer Länge im Bereich von 1 »m bis 5 mm verwendet.

9. Verfahren nach einem der Ansprüche 1 bis 8, dadurch gekennzeichnet, daß man einen Füllstoff verwendet, der Fasern unterschiedlicher Abmessung umfaßt, wobei die kleineren Fasern eine Länge im Bereich von 1 »m bis 1,9 mm und die größeren Fasern eine Länge im Bereich von 2 mm bis 5 mm aufweisen.

10. Verfahren nach einem der Ansprüche 1 bis 5, dadurch gekennzeichnet, daß man als Fasern Kohlefasern verwendet, die eine Länge im Bereich von 100 »m bis 3 mm aufweisen.

11. Verfahren nach einem der Ansprüche 1 bis 10, dadurch gekennzeichnet, daß man den (die) mineralischen (mineralische) Füllstoff(e) auswählt unter Calciumcarbonat, Calciumsulfat, Zinkoxid, Zinkcarbonat, Magnesiumoxid, -hydroxid oder -silikat, Silikoaluminaten oder Glaskügelchen.

12. Verfahren nach einem der Ansprüche 1 bis 10, dadurch gekennzeichnet, daß man als Füllstoff Stärke verwendet.

13. Verfahren nach einem der Ansprüche 1 bis 11, dadurch gekennzeichnet, daß man einen oder mehrere mineralische Füllstoffe mit einer Korngröße im Bereich von etwa 0,5 »m bis etwa 0,2 mm verwendet.

14. Verfahren nach einem der Ansprüche 1 bis 13, dadurch gekennzeichnet, daß man den oder die Füllstoffe in die Matrix in Form einer Vormischung mit einem thermoplastischen Polymer, das mit dem thermoplastischen Harz der Matrix kompatibel und vorzugsweise damit identisch ist, einführt.

15. Verfahren nach Anspruch 14, dadurch gekennzeichnet, daß man eine Vormischung verwendet, die 0,5 bis 80 Vol.-Teile mineralischen Füllstoff (mineralische Füllstoffe) auf 100 Vol.- Teile thermoplastischen Polymers enthält.

16. Verfahren nach einem der Ansprüche 1 bis 15, dadurch gekennzeichnet, daß man die Färbung des Füllstoffs dadurch erzeugt, daß man ihn mit Hilfe eines flüssigen Farbstoffs imprägniert oder mit einem pulverförmigen Farbstoff vermischt.

17. Verfahren nach einem der Ansprüche 1 bis 16, dadurch gekennzeichnet, daß das Formen in einer herkömmlichen Spritzgußvorrichtung erfolgt, umfassend eine beheizte Wanne, in welcher ein verschiebbares Kompressionsorgan angeordnet ist, wobei die beheizte Wanne über wenigstens einen Injektionskopf in das Innere einer Form mündet, und wobei man das Kompressionsorgan je nach dem der Formmasse verliehenen Mischungsgrad im Inneren der Wanne wählt, mit dem Ziel, einen Effekt zu erzielen, der von einer regelmäßigen Maserung aufgrund inniger Durchmischung bis zu einer Marmorierung reicht, die man dadurch erhält, daß man das Material ohne es zu kneten in die beheizte Wanne lediglich eindrückt.

18. Verfahren nach Anspruch 17, dadurch gekennzeichnet, daß man den Formvorgang durchführt, indem man mit Hilfe geeigneter Heizorgane den rückwärtigen Teil der Wanne, über den die Mischung eingeführt wird, auf eine Temperatur t₁ bringt und den Vorderteil der Wanne, über den die Injektion in die Form erfolgt, auf eine Temperatur t₂ bringt, wobei die beiden Temperaturen den optimalen Formtemperaturen für einen bestimmten Formkörper entsprechen und wobei t₁ < t₂ < 210°C ist.

19. Formkörper mit natursteinählichem Aussehen, erhältlich mit Hilfe eines Verfahrens gemäß einem der Ansprüche 1 bis 18.

## Claims

1. Process for the manufacture of articles which have the appearance of natural stones by forming a composition comprising a matrix made of thermoplastic resin and a filler, the said forming being preceded by at least one stage during which the said composition in the molten state is subjected, in entirety and/or in the case of at least one of its parts containing at least a fraction of the thermoplastic resin, to at least one mixing operation, characterized in that use is made of the composition comprising, per 100 parts by volume of coloured or colourless thermoplastic resin, 0.2 to 80 parts by volume of at least two coloured or colourless fillers chosen from natural fibres, carbon fibres and inorganic or vegetable fillers which also have a particle size or dimensions that are different.

2. Process according to Claim 1, characterized in that three different fillers are employed.

3. Process according to Claim 2, characterized in that use is made of an inorganic filler as the finest filler and of natural fibres of different dimensions in the case of the other two fillers.

4. Process according to one of Claims 1 to 3, characterized in that use is made of the matrix consisting of an acrylic resin, a polyvinyl chloride, a nylon, linear polyethylene, polystyrene, polypropylene or an acrylonitrile-butadiene-styrene copolymer.

5. Process according to one of Claims 1 to 4, characterized in that use is made of the matrix modified with 0.1 to 30 % of an elastomer.

6. Process according to one of Claims 1 to 5, characterized in that use is made of natural fibres withstanding a temperature of the order of 200°C.

7. Process according to one of Claims 1 to 6, characterized in that use is made of fibres chosen from cellulose-based fibres.

8. Process according to one of Claims 1 to 7, characterized in that use is made of natural fibres used with a diameter of between 0.7 and 300 microns and a length of between 1 micron and 5 mm.

9. Process according to one of Claims 1 to 8, characterized in that use is made of a filler comprising fibres of different dimensions, the fibres of small dimension having a length of between 1 micron and 1.9 mm and the fibres of larger dimension a length of between 2 mm and 5 mm.

10. Process according to one of Claims 1 to 5, characterized in that use is made of fibres in the form of carbon fibres which have a length of between 100 microns and 3 mm.

11. Process according to one of Claims 1 to 10, characterized in that the inorganic filler(s) is (are) chosen from the group made up of calcium carbonate, calcium sulphate, zinc oxide, zinc carbonate, the oxide, hydroxide or a silicate of magnesium, silicoaluminates or ballotini.

12. Process according to one of Claims 1 to 10, characterized in that a starch is chosen as filler.

13. Process according to one of Claims 1 to 11, characterized in that use is made of inorganic filler(s) having a particle size which ranges from approximately 0.5 micron to approximately 0.2 mm.

14. Process according to one of Claims 1 to 13, characterized in that the filler(s) is (are) introduced into the matrix in the form of premix with a thermoplastic polymer compatible with the thermoplastic resin of the matrix, preferably identical with the latter.

15. Process according to Claim 14, characterized in that use is made of the premix containing from 0.5 to 80 parts by volume of inorganic filler(s) per 100 parts by volume of thermoplastic polymer.

16. Process according to one of Claims 1 to 15, characterized in that the colour of the fillers is obtained by impregnation with the aid of a liquid colorant or by mixing with a pulverulent colorant.

17. Process according to one of Claims 1 to 16, characterized in that the moulding operation is performed in a device for injection moulding of conventional type comprising a heated pot in which a compressing member travels, the heated pot opening, by at least one injection head, into a mould and in that the compressing member is chosen according to the degree of mixing which it can impart to the moulding composition inside the pot, with the aim of obtaining an effect ranging from the uniformly flecked as a result of an intimate mixing to that of marblings as a result of merely thrusting the material into the heated pot without any mixing thereof.

18. Process according to Claim 17, characterized in that the moulding operation is carried out by bringing, by means of appropriate heating members, the rear part of the pot, through which the introduction of the mixture is performed, to a temperature t₁, and the front part of the pot, through which the injection into the mould is performed, to a temperature t₂, the abovementioned two temperatures corresponding to optimum moulding temperatures for a specified article to be produced and being such that t₁ < t₂ < 210°C.

19. Moulded articles which have the appearance of natural stones capable of being obtained by making use of the process as defined in one of Claims 1 to 18.
